# EUROPEAN PATENT SPECIFICATION

(11) **EP 0 742 875 B1**
(45) Date of publication and mention of the grant of the patent: **28.05.1997**
(21) Application number: 94900765.2
(22) Date of filing: 28.10.1993
(51) Int. Cl.: F16J 9/08

(54) **A PISTON TOP RING FOR AN INTERNAL COMBUSTION ENGINE**
KOLBENOBERRING FüR BRENNKRAFTMASCHINEN
SEGMENT SUPERIEUR DE PISTON POUR MOTEUR A EXPLOSION

(30) Priority: 23.11.1992 DK 1403/92
(43) Date of publication of application: 20.11.1996
(73) Proprietor: MAN B&W DIESEL A/S, 2450 Copenhagen SV (DK)
(72) Inventor: FOGH, Jesper, Weis, DK-2000 Frederiksberg (DK)
(74) Representative: Indahl, Peter Jensen
(86) International application number: DK9300346
(87) International publication number: WO9412815

(56) References cited:
- EP-A- 0 377 286
- DE-A- 2 239 488

## Description

The invention relates to a piston top ring for a piston in an internal combustion engine, particularly a large two-stroke engine, where the ring is cut to allow expansion of the ring at the mounting in a ring groove in the side wall of the piston, and where the two ends of the ring at the cut are designed so that the gas in the combustion chamber of the cylinder is substantially prevented from flowing through the cut.

Another kind of a piston ring is known from DE-A-2 239 488. This ring centers the piston in a compressor and is along its circumference provided with grooves having a through-flow area of such a large size that any pressure difference across the ring is eliminated.

A piston top ring of the conventional design is cut by means of a radial cut. When a piston with this top ring is mounted in the cylinder, the two ends of the ring have a certain mutual distance which increases with the ring wear, as the centre line of the ring cut is moved radially outwards concurrently with the wearing down of the ring, whereby the diameter of the ring is increased and the gap between the two ends of the ring increases. The gas in the combustion chamber may flow down at the ring gap through the clearance between the cylinder liner and the piston, and because the ring gap increases as the piston top ring gets worn, the gas through-flow will also increase and cause an increased thermal load on the liner and the piston in the area around the ring gap. The piston top ring will normally be displaced in the circumferential direction of the ring groove when the engine is running, but experience shows that the movement of the top ring may stop, which may lead to a heavy thermal load on the underlying piston ring and on the cylinder liner opposite the ring gap. The increased local thermal load in case of a static top ring may contribute to crack initiation and other undesired material erosion.

As it is desirable to avoid an excessive thermal load, several different types of top rings of the kind mentioned by introduction have been manufactured where the two ends of the ring have mutually overlapping tongues which bar at least the major part of the ring gap and restrict the possibility of the combustion gases of flowing through the ring gap. Such piston top rings may be used in engines fuelled by oil of poor quality, where the top ring prevents combustion residues from penetrating down into the ring pack below the top ring. These so-called gastight top rings are, however, very exposed to wear, the ring wear being dependent upon the pressure difference between the top and lower sides of the ring.

The object of the invention is to provide a long-life piston top ring which permits a delimited gas flow which is substantially constant throughout the life of the ring.

With this object in view, the piston top ring according to the invention is characterized in that the outer side of the ring, which is intended to contact the cylinder wall, has at least two grooves extending from the top side to the lower side of the ring, and that the sum of the width of the grooves amounts to 0.1-1 per cent of the circumference of the ring, preferably 0.2-0.5 per cent thereof.

The grooves yield such a controlled and delimited flow of gas from the combustion chamber to the lower side of the ring that, on one hand, the piston top ring is able to prevent the major part of the combustion products from affecting the ring pack placed below the top ring, as a substantial part of the pressure drop occurs over the top ring, and on the other hand, the grooves cause the ring wear to be kept within acceptable limits, as the pressure drop over the ring is reduced in relation to the pressure drop of the known gastight piston top rings. As the gas flow occurs through the grooves instead of through the previously known ring gap, the gas flow is substantially constant throughout the life of the ring, which promotes a uniform and well-defined thermal load on the cylinder liner, the piston and the piston ring. By distributing the delimited gas flow between two or more grooves, a substantial reduction of the local thermal load in the area adjacent to the groove has been obtained. As the gas is substantially prevented from flowing through the cut, the local thermal load from the gas flow, in addition to being smaller than in the known top rings with a restricted gas flow, is substantially constant and independent of the ring wear.

To obtain the intended effect, it is of importance that the total width of the grooves amounts to 0.1-1 per cent of the circumference of the ring. If the sum of the width of the grooves is less than 0.1 per cent of the circumference of the ring, the ring wear will be relatively heavy, and if the total width exceeds 1 per cent of the circumference, the pressure influence on the underlying piston rings increases. A suitable compromise between low ring wear on one hand and good protection of the underlying rings on the other hand has been obtained with a piston top ring, where the sum of the width of the grooves amounts to 0.2-0.5 per cent of the circumference of the ring.

The grooves may suitably extend obliquely, preferably at an angle of 45°, in relation to the plane of the ring. This reduces the circumferential tensions in the ring, but more important, the delimited gas flow through the oblique grooves contributes towards keeping the top ring in motion when the engine is running, so that the top ring is continuously displaced in the circumferential direction of the ring groove. This counteracts local overheating of the cylinder liner and the underlying piston ring. If a larger or smaller displacement effect is desired, the grooves may form a more or a less acute angle of, for example from 30° to 60°, to the plane of the ring.

If it is desired to maintain the gas flow through the grooves throughout the whole life of the ring, the depth of the grooves should be larger than the radial ring wear occurring during the lifetime of the ring. Despite the relatively large depth of the groove, the gas flow through the groove is determined by the groove area positioned radially outside of the ring groove in the side wall of the piston. In other words, the gas flow is determined by the groove width in the circumferential direction and by the size of the clearance between the inner side of the cylinder liner and the outer side of the piston.

To restrict the thermal load in the area around the groove, the groove width should be suitably small. Therefore, the width of the grooves may be substantially half as large as their depth, when the ring is not worn.

If the piston top ring is to be used in connection with a cylinder liner which is expected to be worn during the life of the ring, the side walls of the groove may suitably diverge radially outwards. When the size of the clearance between the liner and the piston increases, a larger part of the groove is exposed, but as the piston ring is worn at the same time, the inwardly decreasing groove width causes the exposed groove area and thus the thermal load to be substantially constant.

When heavy fuel oil is used as fuel, the combustion products contain slag materials which make it desirable that the width of the individual groove is larger than 1 mm to prevent the slag materials from blocking the groove, and less than 3 mm to restrict the amount of slag materials penetrating through the groove and down into the underlying piston rings.

Preferably, the number of grooves is maximum eight, and suitably from three to five, to take into consideration partly that the sum of the width of the grooves does not become too large in relation to the circumference of the ring, partly that the width of the individual groove does not become so small that the groove is blocked by soot and other combustion residues.

An example of an embodiment of the invention will be described below in further detail with reference to the schematic drawings, in which
Fig. 1 is a section through a segment of a piston fitted in a cylinder liner,
Fig. 2 on a larger scale, is a perspective view of a sketch of a piston top ring according to the invention in the area around the cut,
Fig. 3 is a plan view of the whole piston top ring in an unloaded condition,
Figs. 4 and 5 show a top view and a side view, respectively, of a segment of the ring of Fig. 3 in the area around a groove, and
Fig. 6 is a view corresponding to that of Fig. 4 of another embodiment according to the invention.

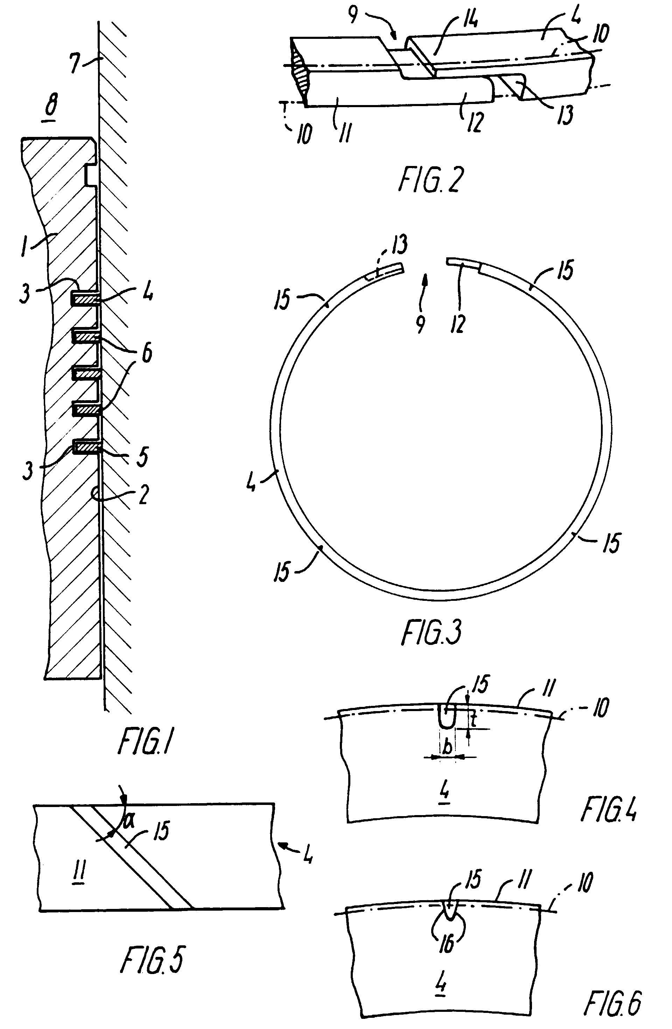

Fig. 1 shows a piston 1, the cylindrical side wall 2 of which is designed with several ring grooves 3, of which the top groove receives a piston top ring 4, and the bottom groove receives an oil distributor ring 5, while usual piston rings 6 have been inserted in the intermediate grooves. The piston rings control the position of the piston in a radial direction in a cylinder liner 7 and prevent the gas pressure in a combustion chamber 8 from penetrating to the space below the piston. The outer side of the oil distributor ring 5 is designed with a large number of slanted tracks which are so close to each other that the tracks sweep the whole of the inner side of the liner and distribute the lubricating oil as a thin film on it. However, it is also possible to omit the oil distributor ring, if the oil-supplying means are themselves capable of providing a suitable distribution of the lubrication oil.

The piston top ring has a cut 9, which renders it possible partly to expand the ring diameter at the mounting in the ring groove 3, partly to permit the two ends of the ring to withdraw from each other as the ring gets worn.

Fig. 2 illustrates an example of a ring cut which substantially prevents gas flow through the cut. The outer rim of the ring groove is indicated by dashed lines 10. An outer side 11 of the ring is in contact with a cylinder liner not shown in the drawing. One end of the ring has a projecting tongue 12 projecting into a corresponding recess at the other end of the ring. In the radial direction, the tongue 12 is smaller than the ring 4, and the recess 13 is delimited at the inner side of the ring by a vertical wall abutting the inner side of the tongue. The axial height of the tongue 12 is smaller than the ring height, and the recess 13 is upwardly delimited by a projecting part 14, the lower side of which abuts the upper side of the tongue 12. As the tongue 12 fills out the recess 13 in the directions of width and height, the combustion gases are substantially prevented from flowing through the cut, whether or not the tongue is spaced from the bottom of the recess 13 in the circumferential direction.

The outer side of the ring has four grooves 15, which extend obliquely at an angle α in relation to the plane of the ring, as shown in Fig. 5. Suitably low tensions in the ring may be obtained when the angle α is in the interval from 25 to 65°. In the example shown, α = 45°.

When the piston top ring is intended for a large slow-running diesel engine, where the piston diameter may be of, for example 0.9 m, the groove width b may be, for example, 2 mm, and the groove depth t may be 5 mm, which may be compared with a clearance between the piston and the liner of about 0.3 mm, when the engine is new. Thus, more than 4.5 mm of the ring width may be worn away, before the groove bottom begins to appear in the clearance.

In Fig. 4, the side walls of the groove are substantially parallel, but as shown in Fig. 6 it is also possible to design the groove with side walls 16 diverging radially outwards. This design of the side wall automatically compensates for the larger clearance between the piston and the liner which occurs after operation of long duration, so that the exposed area of the groove 15 outside of the ring groove 3 is substantially constant throughout the life of the ring.

It is, of course, possible to design the ring cut in another, substantially gastight manner, and at the same time make use of the grooves according to the invention, which ensure an controlled gas flow from the top side to the lower side of the piston top ring, and thus a uniform and suitably delimited gas flow through the individual groove.

The distribution of the gas flow between from two to eight grooves also reduces the thermal load at the individual groove.

According to the invention it is possible to use more than one piston top ring on one and the same piston, so that the pressure drop to be withstood by the top ring is distributed over several rings.

## Claims

1. A piston top ring (4) for a piston (1) in an internal combustion engine, particularly a large two-stroke engine, where the ring is cut to allow expansion of the ring at the mounting in a ring groove (3) in the side wall (2) of the piston, and where the two ends of the ring at the cut (9) are designed so that the gas in the combustion chamber (8) of the cylinder is substantially prevented from flowing through the cut, **characterized** in that the outer side (11) of the ring, which is intended to contact the cylinder wall, has at least two grooves (15) extending from the top side to the lower side of the ring, and that the sum of the width (b) of the grooves (15) amounts to 0.1-1 per cent of the circumference of the ring (4), preferably 0.2-0.5 per cent thereof.

2. A piston top ring according to claim 1, **characterized** in that the grooves (15) extend obliquely, preferably at an angle (α) of 45°, in relation to the plane of the ring.

3. A piston top ring according to claim 1 or 2, **characterized** in that the depth (t) of the groove (15) is larger than the radial ring wear occurring during the lifetime of the ring.

4. A piston top ring according to claim 3, **characterized** in that the width (b) of the grooves (15) is substantially half as large as their depth (t), when the ring (4) is not worn.

5. A piston top ring according to any one of the claims 1-4, **characterized** in that the side walls (16) of the groove (15) diverge radially outwards.

6. A piston top ring according to any one of the claims 1-5, **characterized** in that the width (b) of the individual groove (15) is from 1.0 to 3 mm, preferably about 2 mm.

7. A piston top ring according to any one of the claims 1-6, **characterized** in that the number of grooves (15) is maximum 8 and suitably from 3 to 5.

## Patentansprüche

1. Kolbenoberring (4) für einen Kolben (1) in einer Brennkraftmaschine, insbesondere einem großen Zweitaktmotor, wobei der Ring zur Ermöglichung einer Aufweitung des Ringes bei der Montage in einer Ringnut (3) in der Seitenwand (2) des Kolbens geschlitzt ist und wobei die beiden Enden des Ringes am Schlitz (9) so ausgebildet sind, daß das Gas im Brennraum (8) des Zylinders im wesentlichen an einer Durchströmung des Schlitzes gehindert ist, dadurch gekennzeichnet, daß die Außenseite (11) des Ringes, die für den Kontakt mit der Zylinderwand bestimmt ist, zumindest zwei von der Oberseite zur Unterseite des Ringes verlaufende Nuten (15) aufweist und daß die Summe der Breite (b) der Nuten (15) 0,1 bis 1 % des Umfangs des Ringes (4), vorzugsweise 0,2 bis 0,5 %, beträgt.

2. Kolbenoberring nach Anspruch 1, dadurch gekennzeichnet, daß die Nuten (15) schräg, vorzugsweise mit einem Winkel (α) von 45°, in bezug auf die Ringebene verlaufen.

3. Kolbenoberring nach Anspruch 1 oder 2, dadurch gekennzeichnet, daß die Tiefe (t) der Nut (15) größer ist als der während der Lebensdauer des Ringes auftretende radiale Ringverschleiß.

4. Kolbenoberring nach Anspruch 3, dadurch gekennzeichnet, daß die Breite (b) der Nuten (15) im wesentlichen halb so groß ist wie ihre Tiefe (t), wenn der Ring (4) nicht abgenutzt ist.

5. Kolbenoberring nach einem der Ansprüche 1 bis 4, dadurch gekennzeichnet, daß die Seitenwände (16) der Nut (15) radial nach außen divergieren.

6. Kolbenoberring nach einem der Ansprüche 1 bis 5, dadurch gekennzeichnet, daß die Breite (b) der jeweiligen Nut (15) 1,0 bis 3 mm, vorzugsweise etwa 2 mm, beträgt.

7. Kolbenoberring nach einem der Ansprüche 1 bis 6, dadurch gekennzeichnet, daß die Anzahl der Nuten (15) maximal 8 und zweckmäßig 3 bis 5 beträgt.

## Revendications

1. Segment supérieur (4) de piston (1) pour moteur à explosion, en particulier moteur deux temps de grande taille, où le segment est coupé pour en permettre l'élargissement lors de sa mise en place dans une gorge de segment (3) dans la face latérale (2) du piston, et où les deux extrémités du segment à la coupure (9) sont conçus de manière telle que les gaz dans la chambre de combustion (8) du cylindre sont essentiellement empêchés de s'écouler par la coupure, **caractérisé** en ce la face externe (11) du segment, qui est prévue pour venir en contact avec la paroi du cylindre, présente au moins deux rainures (15) qui s'étendent depuis la face supérieure jusqu'à la face inférieure du segment, et en ce que la somme de la largeur (b) des rainures (15) est de 0,1 à 1 pour cent de la circonférence du segment (4), de préférence 0,2 à 0,5 pour cent de celle-ci.

2. Segment supérieur de piston selon la revendication 1, **caractérisé** en ce que les rainures (15) s'étendent obliquement, de préférence sous un angle (α) de 45°, par rapport au plan du segment.

3. Segment supérieur de piston selon les revendications 1 ou 2, **caractérisé** en ce que la profondeur (t) de la rainure (15) est supérieure à l'usure radiale du segment apparaissant pendant la durée de vie du segment.

4. Segment supérieur de piston selon la revendication 3, **caractérisé** en ce que la largeur (b) des rainures (15) est substantiellement de la moitié de leur profondeur (t), lorsque le segment (4) n'est pas usé.

5. Segment supérieur de piston selon l'une quelconque des revendications 1 à 4, **caractérisé** en ce que les parois latérales (16) de la rainure (15) divergent radialement vers l'extérieur.

6. Segment supérieur de piston selon l'une quelconque des revendications 1 à 5, **caractérisé** en ce que la largeur (b) de chacune des rainures (15) est de 1,0 à 3 mm, de préférence environ 2 mm.

7. Segment supérieur de piston selon l'une quelconque des revendications 1 à 6, **caractérisé** en ce que le nombre de rainures (15) est au maximum de 8, avantageusement de 3 à 5.
